# EUROPÄISCHE PATENTANMELDUNG

(11) **EP 3 617 567 A1**
(43) Veröffentlichungstag der Anmeldung: **04.03.2020**
(21) Anmeldenummer: 18465564.5
(22) Anmeldetag: 27.08.2018
(51) Int. Cl.: F16K 1/22, F02D 9/04, F02D 9/10, F16K 31/04

(54) **VENTIL ZUR STEUERUNG VON ABGAS ODER FRISCHLUFT IN EINER ANTRIEBSEINHEIT**

(71) Anmelder: Continental Automotive GmbH, 30165 Hannover (DE)
(72) Erfinder: Opre, Calin, 300576 Timisoara (RO); Ghidel, Paul, 332080 Petrosani, Hunedoara (RO); Fanu, Alexandra, 445100 Carei (RO); Aronet, Vlad, 325300 Bocsa, Caras-Severin (RO); Paladuta, Vladimir, 307220 Giroc, jd. Timis (RO)

(57) **Zusammenfassung**

Ein Ventil (7) zur Steuerung von Frischluft oder Abgas an einer Antriebsmaschine (2) eines Kraftfahrzeuges hat eine Halteeinrichtung (17) zur Abstützung eines Ventilkörpers (15). Die Halteeinrichtung (17) begrenzt den Bewegungsbereich des Ventilkörpers (15) wenn ein elektromotorischer Antrieb (6) stromlos ist. Damit wird ein Fail Save Verhalten des Ventils (7) sichergestellt.

## Beschreibung

Die Erfindung betrifft ein Ventil zur Steuerung von Abgas oder Frischluft in einer Antriebseinheit eines Kraftfahrzeuges oder Generators mit einem einen Kanal aufweisenden Ventilgehäuse, mit einem auf einer Antriebswelle befestigten Ventilkörper zum Freigeben oder Verschließen eines Strömungsquerschnitts des Kanals und mit einem Antrieb zur Verschwenkung der Antriebswelle.

Solche Ventile werden beispielsweise in Drosselklappenstutzen oder Abgasklappen zur Steuerung von Abgas oder Frischluft bei Brennkraftmaschinen oder Brennstoffzellen heutiger Kraftfahrzeuge häufig eingesetzt und sind aus der Praxis bekannt. Der Ventilkörper wird von dem Antrieb zwischen einer den Kanal vollständig öffnenden Stellung und einer vollständig schließenden Stellung angetrieben. Um bei Ausfall des Antriebs des Ventilkörpers die Antriebseinheit weiter betreiben zu können, ist es wünschenswert, wenn das Ventil eine Grundstellung hat, in der der Ventilkörper in einer vorgesehenen Position gehalten ist. Damit wird entweder ein so genannter Fail Safe Betrieb ermöglicht oder die Öffnung des Kanals auf einen vorgesehenen Wert begrenzt.

Man könnte daran denken, den Ventilkörper mittels einer Rückstellfeder in eine Grundstellung vorzuspannen. Nachteilig hierbei ist jedoch, dass die Rückstellfeder Kräfte in Stellrichtung des Ventilkörpers einleitet. Damit ist die Stellung des Ventilkörpers abhängig von der Federkraft der Rückstellfeder. Zudem muss im Normalbetrieb der Antrieb des Ventilkörpers gegen die Kraft der Rückstellfeder antreiben, was zu einem erhöhten Energieaufwand und zu einem erhöhten Verschleiß des Antriebs des Ventilkörpers führt.

Der Erfindung liegt das Problem zugrunde, ein Ventil der eingangs genannten Art so weiter zu bilden, dass es bei Ausfall des Antriebs des Ventilkörpers eine zuverlässige Abstützung in einer vorgesehenen Position ermöglicht.

Dieses Problem wird erfindungsgemäß dadurch gelöst, dass der Ventilkörper eine Halteeinrichtung mit einem Federelement und einem von dem Federelement vorgespannten Rastkörper und zumindest einem Anschlag für den Rastkörper hat und dass nach Abschaltung des Antriebs der Bewegungsbereich des Ventilkörpers von dem Anschlag begrenzt ist.

Durch diese Gestaltung lässt sich der Öffnungswinkel des Ventilkörpers von dem Anschlag einfach auf einen vorgesehenen Wert begrenzen. Der Anschlag kann die Bewegung des Ventilkörpers in einer vorgesehenen Stellung halten oder den Bewegungsbereich des Ventilkörpers begrenzen. Damit wird bei Ausfall des Antriebs des Ventilkörpers eine zuverlässige Abstützung des Ventilkörpers sichergestellt.

Belastungen des Ventilkörpers in Verstellrichtung lassen sich gemäß einer anderen vorteilhaften Weiterbildung der Erfindung zuverlässig vermeiden, wenn der Rastkörper senkrecht zur Stirnseite eines den Ventilkörper antreibenden Zahnrades bewegbar ist. Durch diese Gestaltung wirken die Belastungen des Rastkörpers in axialer Richtung auf das Zahnrad. Damit wird zuverlässig verhindert, dass ein Drehmoment von dem Rastkörper in das Zahnrad eingeleitet wird. Weiterhin ist hierdurch die Halteeinrichtung von dem Ventilkörper getrennt und kann an nahezu beliebiger Stelle in einem den Ventilkörper antreibende Getriebe montiert sein.

Das Ventil lässt sich gemäß einer vorteilhaften Weiterbildung der Erfindung besonders kostengünstig fertigen, wenn das das Federelement und der Rastkörper einstückig gefertigt sind.

Das Ventil gestaltet sich gemäß einer vorteilhaften Weiterbildung der Erfindung konstruktiv besonders einfach, wenn der Rastkörper von einer nasenförmigen Ausformung des Federelementes erzeugt ist. Durch entsprechende Neigungswinkel des Federelementes an der nasenförmigen Ausformung lässt sich zudem eine Rasteinrichtung erzeugen, welche eine Begrenzung des Bewegungsbereichs durch den Anschlag nur in einer Richtung ermöglicht.

Das Ventil gestaltet sich gemäß einer anderen vorteilhaften Weiterbildung der Erfindung besonders kompakt, wenn ein Zahnrad eines den Ventilkörper antreibenden Getriebes den Anschlag oder das Federelement haltert.

Zur weiteren Verringerung des Fertigungsaufwandes trägt es gemäß einer anderen vorteilhaften Weiterbildung der Erfindung bei, wenn das Federelement mit dem Zahnrad stoffschlüssig verbunden ist.

Die Montage des Federelementes gestaltet sich gemäß einer anderen vorteilhaften Weiterbildung der Erfindung besonders einfach, wenn das Zahnrad aus Kunststoff gefertigt ist und ein Teilbereich des Federelementes von dem Kunststoff des Zahnrades umspritzt ist.

Zur weiteren Vereinfachung des konstruktiven Aufbaus des Ventils trägt es gemäß einer anderen vorteilhaften Weiterbildung der Erfindung bei, wenn das Federelement einen verschieblichen Bolzen umschließt und wenn der Bolzen den Rastkörper aufweist.

Zur weiteren Vereinfachung des konstruktiven Aufbaus des Ventils trägt es gemäß einer anderen vorteilhaften Weiterbildung der Erfindung bei, wenn das Federelement in einem verschieblichen Topf angeordnet ist und wenn der Topf den Rastkörper aufweist.

Zur weiteren Vereinfachung des konstruktiven Aufbaus des Ventils trägt es gemäß einer anderen vorteilhaften Weiterbildung der Erfindung bei, wenn das Federelement als federnder Arm ausgebildet ist und der Rastkörper am Ende des Arms angeordnet ist. Die Erfindung lässt zahlreiche Ausführungsformen zu. Zur weiteren Verdeutlichung ihres Grundprinzips sind mehrere davon in der Zeichnung dargestellt und werden nachfolgend beschrieben. Diese zeigt in
- Fig.1: schematisch einen Teilbereich eines Kraftfahrzeuges mit einer Antriebsmaschine und einem Ventil,
- Fig.2: vergrößert das Ventil aus Figur 1 in einer perspektivischen Darstellung,
- Fig.3: eine Schnittdarstellung durch einen Teilbereich des Ventils aus Figur 2 entlang der Linie III - III,
- Fig.4a: stark vergrößert eine weitere Ausführungsform des Ventils im Bereich einer Halteeinrichtung,
- Fig.4b: die Halteeinrichtung aus Figur 4a in einer weiteren perspektivischen Darstellung,
- Fig.5a: stark vergrößert eine weitere Ausführungsform des Ventils im Bereich einer Halteeinrichtung,
- Fig.5b: die Halteeinrichtung aus Figur 5a in einer weiteren perspektivischen Darstellung,
- Fig.6: stark vergrößert eine weitere Ausführungsform des Ventils im Bereich einer Halteeinrichtung,
- Fig.7a: stark vergrößert eine weitere Ausführungsform des Ventils im Bereich einer Halteeinrichtung,
- Fig.7b: die Halteeinrichtung aus Figur 7a in einer weiteren perspektivischen Darstellung,

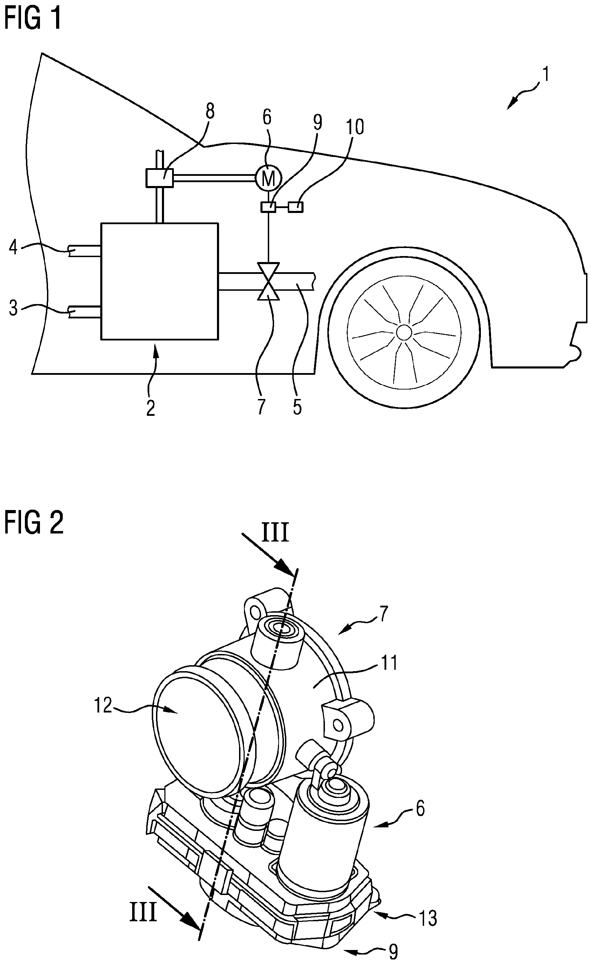

Figur 1 zeigt schematisch einen Teilbereich eines Kraftfahrzeuges 1 mit einer eine Antriebsmaschine 2 aufweisenden Antriebseinheit. Die Antriebsmaschine 2 kann das Kraftfahrzeug als Brennkraftmaschine mechanisch oder als Brennstoffzelle elektrisch antreiben. Die Antriebseinheit hat zwei Zuführkanäle 3, 4 für Brennstoff, beispielsweise gasförmigen Brennstoff, und für Frischluft und einen Abgasstrang 5. Bei der Antriebsmaschine 2 kann es sich beispielsweise um eine Brennstoffzelle oder um eine Brennkraftmaschine handeln. In dem Abgasstrang 5 ist ein von einem elektromotorischen Antrieb 6 ansteuerbares Ventil 7 angeordnet.

In einer nicht dargestellten Ausführungsform kann das Ventil 7 auch in dem Frischluft führenden oder Brennstoff führenden Zuführkanal 3, 4 angeordnet sein.

Von der Antriebsmaschine 2 erzeugter elektrischer Strom wird einer Steuereinrichtung 8 zugeführt. Die Steuereinrichtung 8 ist mit einem nicht dargestellten Bordnetz des Kraftfahrzeuges verbunden. Der elektromotorische Antrieb 6 des Ventils 7 wird über die Steuereinrichtung 8 mit elektrischem Strom versorgt. Zwischen dem Ventil 7 und dem elektromotorischen Antrieb 6 ist ein Getriebe 9 mit einem Positionssensor 10 angeordnet. Der Positionssensor 10 erfasst die Stellung und damit die Funktion des Ventils 7.

Figur 2 zeigt vergrößert das Ventil 7 aus Figur 1 in einer perspektivischen Darstellung. Das Ventil 7 hat ein Ventilgehäuse 11 mit einem Kanal 12. An dem Ventilgehäuse 11 ist ein Antriebsgehäuse 13 mit dem elektromotorischen Antrieb 6 befestigt. Das in Figur 1 schematisch dargestellte Getriebe 9 ist ebenfalls in dem Antriebsgehäuse 13 angeordnet.

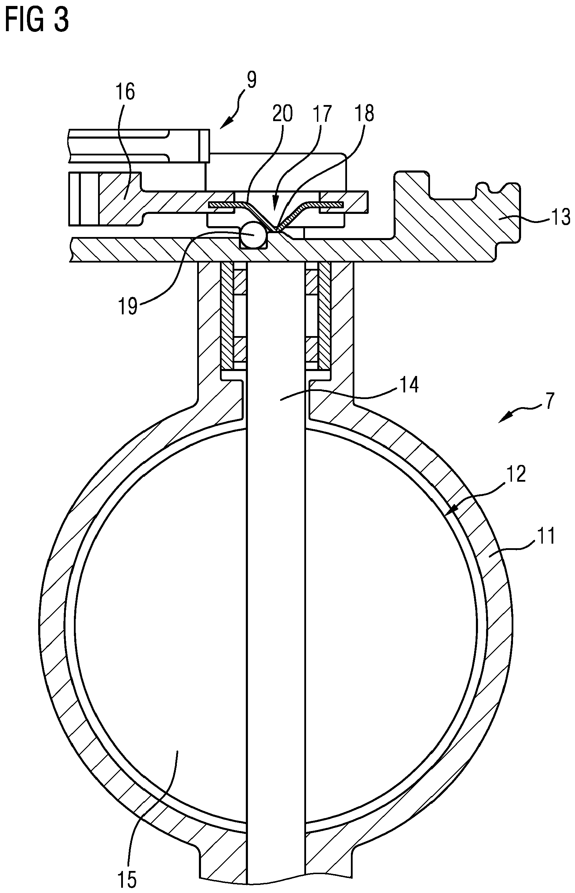

Figur 3 zeigt eine Schnittdarstellung durch das Ventilgehäuse 11 aus Figur 2 mit angrenzenden Bereichen des Antriebsgehäuses 13 entlang der Linie III - III. Das Ventil 7 hat eine von dem elektromotorischen Antrieb 6 verschwenkbare Antriebswelle 14 mit einem darauf angeordneten scheibenförmigen Ventilkörper 15. Der Ventilkörper 15 ist auf der Antriebswelle 14 befestigt. Durch eine Verschwenkung der Antriebswelle 14 wird damit der Strömungsquerschnitt des Kanals 12 freigegeben oder ganz oder teilweise verschlossen. Das Getriebe 9 hat ein auf der Antriebswelle 14 aufgepresstes, als Teilzahnrad ausgebildetes Zahnrad 16. Das Zahnrad 16 hat eine mit dem Antriebsgehäuse 13 zusammenwirkende Halteeinrichtung 17 mit einem auf dem Zahnrad 16 angeordneten Rastkörper 18 und einem in dem Antriebsgehäuse 13 befestigten Anschlag 19. Der Rastkörper 18 ist als nasenförmige Ausformung einstückig mit einem umspritzten Federelement 20 gefertigt und axial von der Stirnseite des Zahnrades 16 weggespannt. Die Befestigung des Federelementes 20 erfolgt durch ein Umspritzen mit dem Kunststoff des Zahnrades 16. Beim Verschwenken des von dem in Figur 1 dargestellten elektromotorischen Antrieb 6 angetriebenen Zahnrades 16 und damit des Ventilkörpers 15 gleitet der Rastkörper 18 über den Anschlag 19. Beim Ausfall des elektromotorischen Antriebs 6 wird der Bewegungsbereich des Rastkörpers 18 und damit des Ventilkörpers 15 von dem Anschlag 19 begrenzt.

Im Folgenden sind schematisch verschiedene alternative Ausführungsformen der Halteeinrichtung 17 offenbart, welche sich von der zuvor Beschriebenen im konstruktiven Aufbau unterscheiden. Die Funktionen der Ausführungsformen entsprechen jeweils der Funktion der beschriebenen Halteeinrichtung 17.

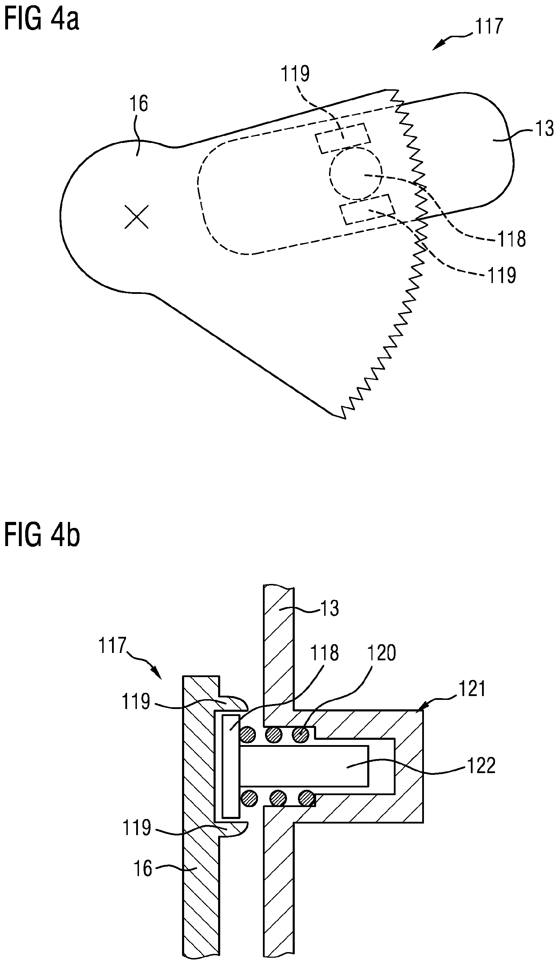

Die Figuren 4a und 4b zeigen eine weitere Ausführungsform einer Halteeinrichtung 117, welche sich von der aus Figur 3 dadurch unterscheidet, dass ein von einem Federelement 120 vorgespannter Rastkörper 118 an dem Antriebsgehäuse 13 angeordnet, während zwei den Rastkörper 118 einfassende Anschläge 119 an dem Zahnrad 16 des Getriebes 7 befestigt sind. Der Rastkörper 118 ist auf einem in einer topfförmigen Vertiefung 121 des Antriebsgehäuses 13 geführten Bolzen 122 angeordnet. Das Federelement 120 umschließt den Bolzen 122 und spannt diesen gegen die Stirnseite des Zahnrades 16 vor.

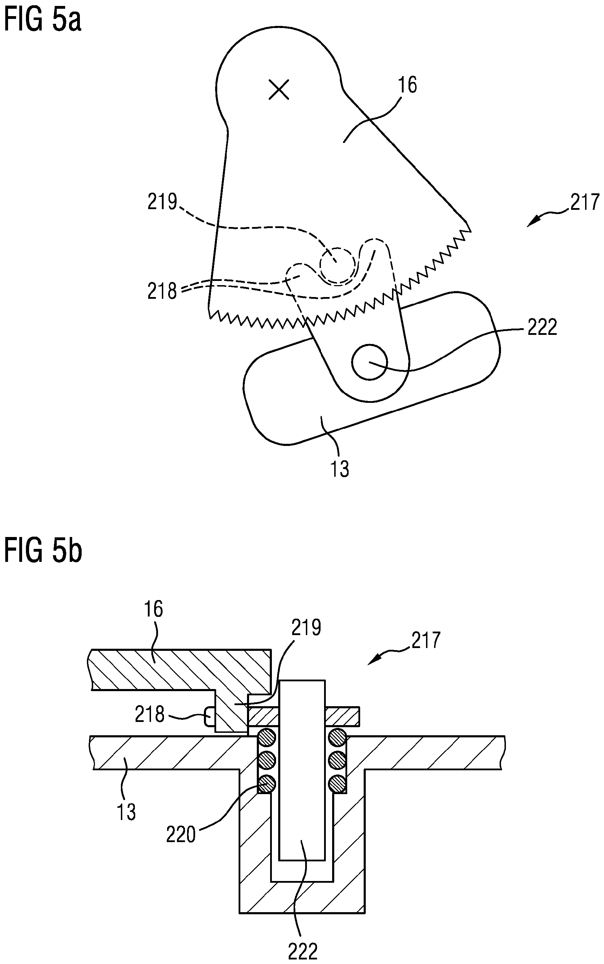

Die Figuren 5a und 5b offenbaren eine weitere Ausführungsform einer Halteeinrichtung 217, welche sich von der aus den Figuren 4a und 4b nur dadurch unterscheidet, dass ein Anschlag 219 auf dem Zahnrad 16 als Zapfen ausgebildet ist. Ein Rastkörper 218 ist auf einem Bolzen 222 angeordnet und umgreift den Anschlag 219 gabelförmig. Der Bolzen 222 ist in einer Vertiefung 221 im Antriebsgehäuse 13 geführt und von einem Federelement 220 gegen die Stirnseite des Zahnrades 16 vorgespannt.

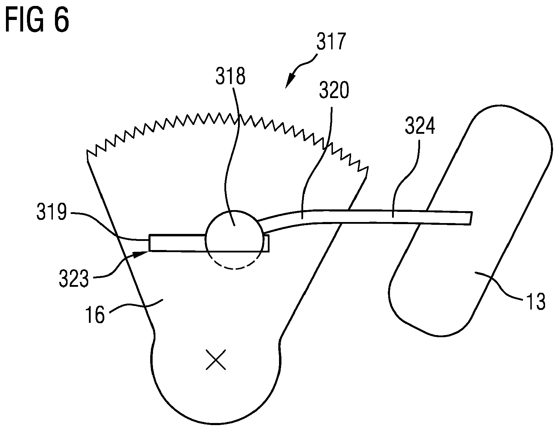

Figur 6 zeigt eine weitere Ausführungsform einer Halteeinrichtung 317, bei dem im Zahnrad 16 eine Nut 323 mit einem Anschlag 319 angeordnet ist. Ein Rastkörper 318 ist auf dem freien Ende eines in dem Antriebsgehäuse 13 befestigten Arms 324 angeordnet. Der Arm 324 ist als Federelement 320 ausgebildet und spannt den Rastkörper 318 gegen eine Stirnseite des Zahnrades 16 vor.

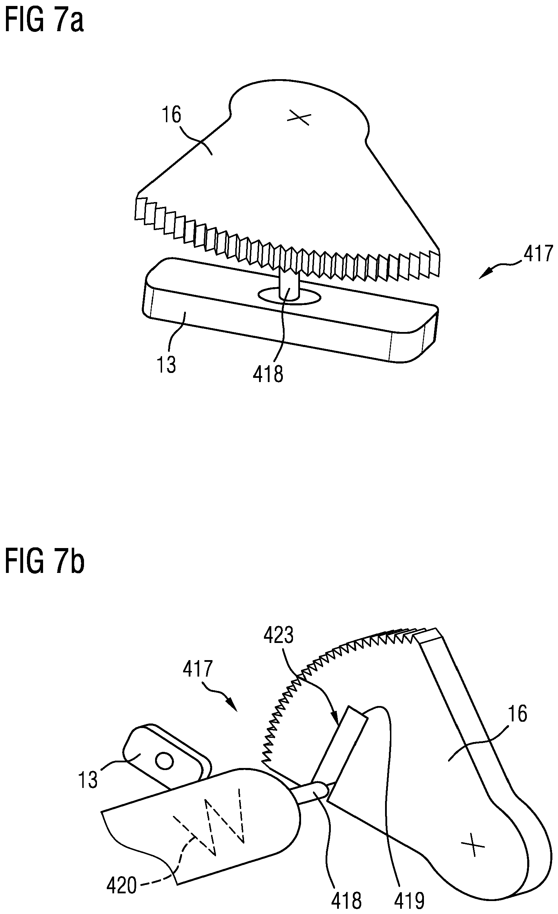

Die Figuren 7a und 7b offenbaren eine weitere Ausführungsform einer Halteeinrichtung 417, bei der das Zahnrad 16 eine Nut 423 hat, wobei das Ende der Nut 423 einen Anschlag 419 für einen Rastkörper 418 bildet. Der Rastkörper 418 ist auf einem an dem Antriebsgehäuse 13 verschieblich geführten Topf 425 angeordnet und axial gegen die Stirnseite des Zahnrades 16 geführt. Ein schematisch dargestelltes Federelement 420 zur Vorspannung des Rastkörpers 418 ist innerhalb des Topfes 425 angeordnet.

## Patentansprüche

1. Ventil (7) zur Steuerung von Abgas oder Frischluft in einer Antriebseinheit eines Kraftfahrzeuges oder Generators mit einem einen Kanal (12) aufweisenden Ventilgehäuse (11), mit einem auf einer Antriebswelle (14) befestigten Ventilkörper (15) zum Freigeben oder Verschließen eines Strömungsquerschnitts des Kanals (12) und mit einem Antrieb (6) zur Verschwenkung der Antriebswelle (14), **dadurch gekennzeichnet, dass** der Ventilkörper (15) eine Halteeinrichtung (17, 117, 217, 317, 417) mit einem Federelement (20, 120, 220, 320, 420) und einem von dem Federelement (20, 120, 220, 320, 420) vorgespannten Rastkörper (18, 118, 218, 318, 418) und zumindest einem Anschlag (19, 119, 219, 319, 419) für den Rastkörper (18, 118, 218, 318, 418) hat und dass nach Abschaltung des Antriebs (6) der Bewegungsbereich des Ventilkörpers (15) von dem Anschlag (19, 119, 219, 319, 419) begrenzt ist.

2. Ventil nach Anspruch 1, **dadur chgekennzeichnet**, dass der Rastkörper (18, 118, 218, 318, 418) senkrecht zur Stirnseite eines den Ventilkörper (15) antreibenden Zahnrades (16) bewegbar ist.

3. Ventil nach Anspruch 1 oder 2, **dadur ch gekennzeichnet**, dass das das Federelement (20, 320) und der Rastkörper (18, 318) einstückig gefertigt sind.

4. Ventil nach zumindest einem der Ansprüche 1 bis 3, **dadurch gekennzeichnet, dass** der Rastkörper (18) von einer nasenförmigen Ausformung des Federelementes (20) erzeugt ist.

5. Ventil nach zumindest einem der Ansprüche 1 bis 4, **dadurch gekennzeichnet, dass** ein Zahnrad (16) eines den Ventilkörper (15) antreibenden Getriebes (9) den Anschlag (119, 219, 319, 419) oder das Federelement (20) haltert.

6. Ventil nach zumindest einem der Ansprüche 1 bis 5, **dadurch gekennzeichnet, dass** das Federelement (20) mit dem Zahnrad stoffschlüssig verbunden ist.

7. Ventil nach zumindest einem der Ansprüche 1 bis 6, **dadurch gekennzeichnet, dass** das Zahnrad aus Kunststoff gefertigt ist und ein Teilbereich des Federelementes (20) von dem Kunststoff des Zahnrades umspritzt ist.

8. Ventil nach zumindest einem der Ansprüche 1 bis 7, **dadurch gekennzeichnet, dass** das Federelement (120, 220) einen verschieblichen Bolzen (122, 222) umschließt und dass der Bolzen (122, 222) den Rastkörper (118, 218) aufweist.

9. Ventil nach zumindest einem der Ansprüche 1 bis 8, **dadurch gekennzeichnet, dass** das Federelement (420) in einem verschieblichen Topf (425) angeordnet ist und dass der Topf (425) den Rastkörper (418) aufweist.

10. Ventil nach zumindest einem der Ansprüche 1 bis 9, **dadurch gekennzeichnet, dass** das Federelement (320) als federnder Arm (324) ausgebildet ist und der Rastkörper (318) am Ende des Arms (324) angeordnet ist.
